# EUROPÄISCHE PATENTSCHRIFT

(11) **EP 1 169 635 B1**
(45) Veröffentlichungstag und Bekanntmachung des Hinweises auf die Patenterteilung: **16.07.2008**
(21) Anmeldenummer: 01913539.1
(22) Anmeldetag: 27.01.2001
(51) Int. Cl.: G01N 27/407

(54) **ELEKTROCHEMISCHER MESSFÜHLER UND VERFAHREN ZU DESSEN HERSTELLUNG**
ELECTROCHEMICAL SENSOR AND METHOD FOR THE PRODUCTION THEREOF
CAPTEUR ELECTROCHIMIQUE ET SON PROCEDE DE FABRICATION

(30) Priorität: 04.02.2000 DE 10004959
(43) Veröffentlichungstag der Anmeldung: 09.01.2002
(73) Patentinhaber: ROBERT BOSCH GMBH, 70442 Stuttgart (DE)
(72) Erfinder: NEUMANN, Harald, 71739 Oberriexingen (DE); DIEHL, Lothar, 70499 Stuttgart (DE)
(86) Internationale Anmeldenummer: PCT/DE2001/000332
(87) Internationale Veröffentlichungsnummer: WO 2001/057511

(56) Entgegenhaltungen:
- JP-A- 61 111 455
- US-A- 5 098 549
- US-A- 5 395 506
- US-A- 5 419 828

## Beschreibung

### Stand der Technik

Die Erfindung geht aus von einem elektrochemischen Messfühler nach dem Oberbegriff der Ansprüche 1,2 und 3.

Derartige elektrochemische Messfühler sind beispielsweise aus Automotive Electronics Handbook (1994), Kapitel 6, Wiedenmann et al., "Exhaust Gas Sensors", zum Einsatz in der Abgasanalyse von Verbrennungsmotoren bekannt. Die Druckschrift JP 61111455 A offenbart ebenfalls einen Messfühler mit den Merkmalen des Oberbegriffs der Ansprüche 1,2 und 3 sowie ein Verfahren zu dessen Herstellung. Derartige Messfühler enthalten ein planares Sensorelement, das durch Bedrucken von keramischen Folien mit Elektroden, durch Zusammenlaminieren unter Anwendung einer Presskraft mittels eines Presspolsters und durch Sintern hergestellt wird. Bei diesen Sensorelementen besteht jedoch die Gefahr, dass die einem Gaskanal benachbarte Elektrode beim Laminieren durch die Anwendung der Presskraft teilweise oder vollständig abgetrennt wird, so dass der bestimmungsgemäße Gebrauch beeinträchtigt oder ausgeschlossen ist.

### Vorteile der Erfindung

Der erfindungsgemäße elektrochemische Meßfühler mit den kennzeichnenden Merkmalen der unabhängigen Ansprüche hat gegenüber dem Stand der Technik den Vorteil, daß eine durchgängige, quetschungs- und unterbrechungsfreie Führung der Elektrode beziehungsweise der Elektrodenzuleitungen auch in einem Übergangsbereich zwischen Gaskanal und angrenzenden Festelektrolytfolien weitestgehend gewährleistet ist.

Durch die Wahl einer geeigneten Schichtstruktur im Übergangsbereich der Elektrode wird erreicht, daß die im Laminierprozeß in Pastenform vorliegende Elektrode einem geringeren Druck ausgesetzt ist, so daß weitestgehend verhindert wird, daß die Elektrode im geklemmten Bereich verquetscht und in den offenen Bereich transportiert wird. Somit wird eine Reduzierung der Querschnittsfläche der Elektrode im Übergangsbereich oder gar eine vollständige Abtrennung der Elektrode verhindert, wodurch eine geringere Fertigungsstreuung, beispielsweise bezüglich des elektrischen Widerstandes der Elektrode, und ein geringerer Fertigungsausschuß erreicht wird.

Das erfindungsgemäße Verfahren zur Herstellung eines elektrochemischen Meßfühlers gewährleistet, daß die Elektrode beim Zusammenlaminieren mit einem geringeren lokalen Druck beaufschlagt und damit weitestgehend quetschungs- und unterbrechungsfrei gefertigt wird.

Durch die in den Unteransprüchen genannten Maßnahmen sind vorteilhafte Weiterbildungen des im Hauptanspruch angegebenen Meßfühlers möglich.

### Zeichnung

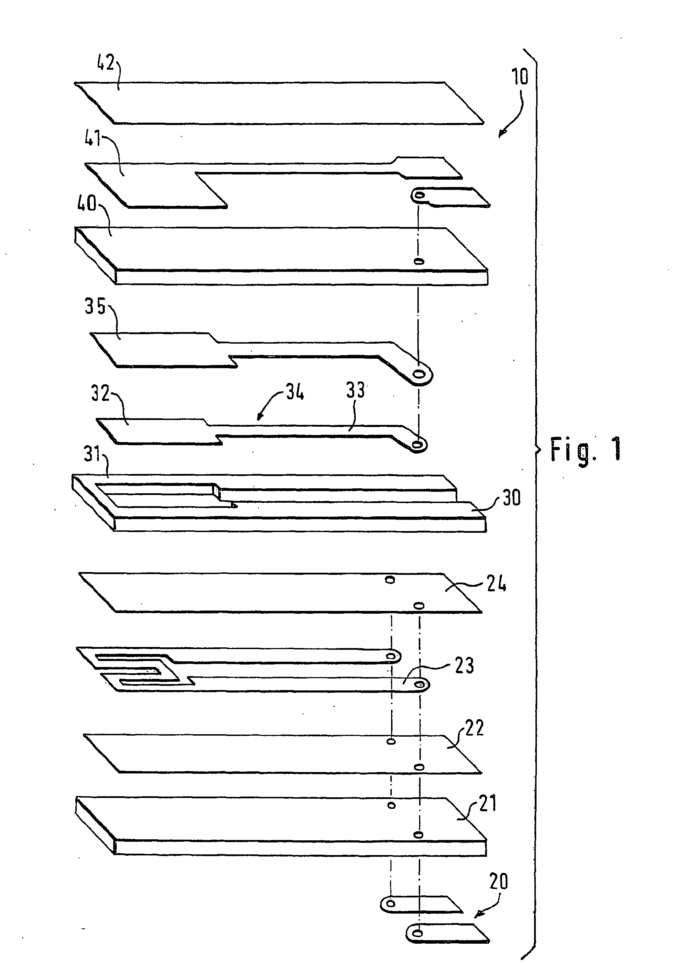

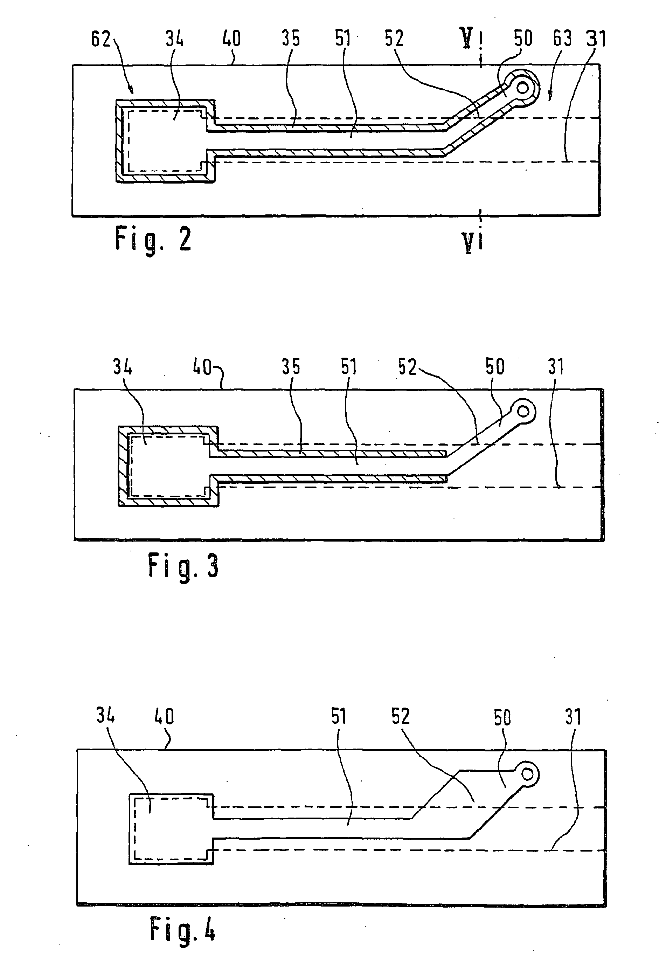

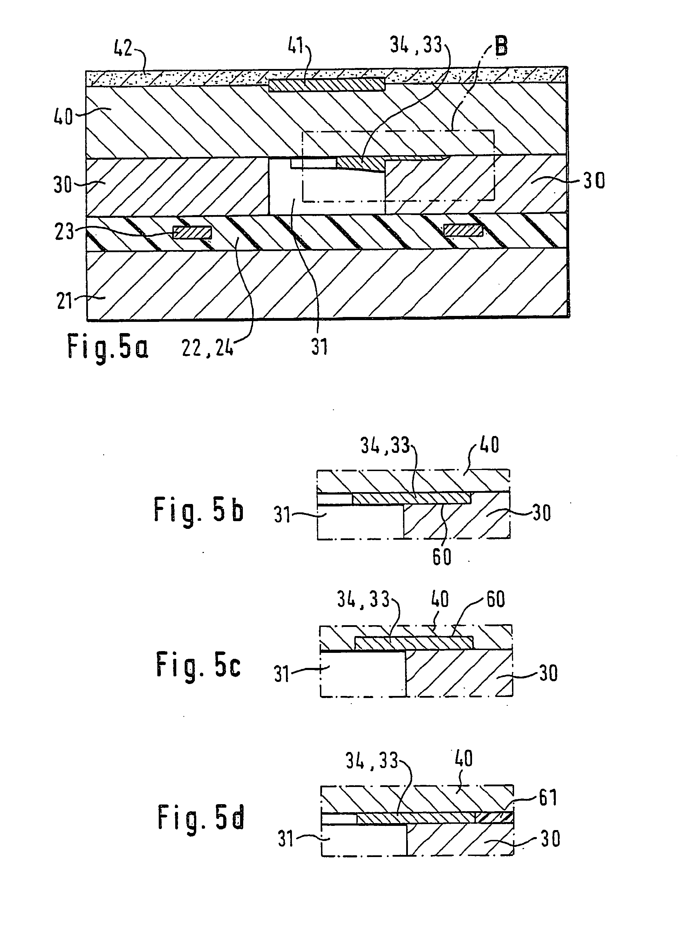

Die Erfindung wird anhand der Zeichnung und der nachfolgenden Beschreibung erläutert. Es zeigen Fig. 1 eine Ausführungsform eines Sensorelements nach dem Stand der Technik in Explosionsdarstellung, Fig. 2 eine Draufsicht auf eine Festelektrolytfolie des Sensorelements nach dem Stand der Technik, Fig. 3 eine Draufsicht auf eine Festelektrolytfolie eines erfindungsgemäßen Sensorelements gemäß einer ersten Ausführungsform, Fig. 4 eine weitere Ausführungsform des erfindungsgemäßen Sensorelements in Draufsicht auf die Festelektrolytfolie, Fig. 5a eine Schnittdarstellung des Sensorelements nach der Linie V - V in Fig. 2 gemäß dem Stand der Technik und Fig. 5b bis 5d jeweils einen Ausschnitt B gemäß Fig. 5a mit Ausführungsformen der Erfindung.

### Beschreibung der Ausführungsbeispiele

Die Figur 1 zeigt ein an sich aus dem Stand der Technik bekanntes planares Sensorelement 10 eines elektrochemischen Meßfühlers zur Analyse von Gasen. Das Sensorelement 10 weist elektrische Anschlußkontakte 20, eine erste Festelektrolytfolie 30, in der ein Gaskanal 31 ausgebildet ist, der anschlußseitig über eine Öffnung mit einem außerhalb des Sensorelements 10 liegenden Gasraum in Verbindung steht, eine Elektrode 34 als Referenzelektrode, bestehend aus einer Elektrodenfläche 32 und einer Elektrodenzuleitung 33, eine Folienbinderschicht 35, eine zweite Festelektrolytfolie 40, eine Meßelektrode 41 und eine Abdeckschicht 42 sowie eine weitere Festelektrolytfolie 21 als Heizerfolie, eine erste Isolationsschicht 22, einen Heizer 23 und eine weitere Isolationsschicht 24 auf. Die Festelektrolytfolien 21, 30, 40 können auch als Festelektrolytschichten ausgeführt sein.

Die Figur 2 zeigt das bekannte Sensorelement gemäß Figur 1 in Draufsicht auf die Großfläche der zweiten Festelektrolytfolie 40 mit der Folienbinderschicht 35 und der Elektrode 34. Die Elektrode 34 ist in einem ersten, geklemmten Bereich 50 zwischen der ersten Festelektrolytfolie 30 und der zweiten Festelektrolytfolie 40 und in einem zweiten, offenen Bereich 51 zwischen dem Gaskanal 31 und der zweiten Festelektrolytfolie 40 angeordnet. Die Lage des Gaskanals 31 ist mit gestrichelten Linien gekennzeichnet.

Die Figur 3 zeigt ein erstes Ausführungsbeispiel der Erfindung, wobei in Abänderung der bekannten Ausführung gemäß Figur 2 die Folienbinderschicht 35 im Übergangsbereich 52 zwischen dem geklemmten Bereich 50 und dem offenen Bereich 51 der Elektrode 34 ausgespart ist. Es sind weitere Ausführungen denkbar, in denen die Elektrode 34 von mindestens einer weiteren Folienbinderschicht umgeben ist, die ebenso im Übergangsbereich 52 ausgespart ist. Die Anordnung der Aussparungen bei mehreren Folienbinderschichten kann stufenweise erfolgen. Durch das Aussparen mindestens einer Folienbinderschicht 35 wird die Höhe des Materials zwischen erster und zweiter Festelektrolytfolie 30, 40 im Übergangsbereich 52 vermindert, wodurch die Elektrode 34 im Übergangsbereich 52 beim Laminieren mit einem geringeren Druck beaufschlagt wird.

Die Figur 4 zeigt ein weiteres Ausführungsbeispiel der Erfindung in Draufsicht, wobei in Abänderung der bekannten Ausführung gemäß Figur 2 die Elektrode 34 im Übergangsbereich 52 entlang der Grenzfläche zwischen dem ersten Bereich 50 und dem zweiten Bereich 51 deutlich breiter ist als im Bereich des Gaskanals 31. Hierdurch wird erreicht, daß die Gefahr der Abtrennung der Elektrode 34 im Übergangsbereich 52 verringert wird.

Die Figur 5a zeigt für das an sich bekannte Sensorelement gemäß Figur 1 den Übergangsbereich 52 der Elektrode 34 in einer Schnittdarstellung. Aus der Schnittdarstellung geht deutlich hervor, daß die Elektrodenzuleitung 33 an der Kante des Gaskanals 31 zwischen den Festelektrolytfolien 30 und 40 gequetscht ist, wobei bei einer hohen Preßkraft durch die Kante eine Durchtrennung der Elektrodenzuleitung 33 an dieser Stelle bewirkt werden kann.

Die Figuren 5b bis 5d zeigen Ausführungsformen des Übergangsbereiches 52 der Erfindung. In Figur 5b beziehungsweise 5c ist eine die Elektrodenzuleitung 33 aufnehmende Aussparung 60 in die erste Festelektrolytschicht 30 beziehungsweise in die zweite Festelektrolytschicht 40 eingeprägt. In Figur 5d ist eine Ausführungsform dargestellt, die neben der Elektrodenzuleitung 33 eine Ausgleichsschicht 61 aufweist. Die Schichtstrukturen der in Figur 5b bis 5d gezeigten Ausführungsformen des Übergangsbereichs 52 verhindern ein Verquetschen der Elektrodenzuleitung 33 während des Laminierprozesses.

In weiteren, nicht dargestellten Ausführungsformen der Erfindung können die Aussparung 60 oder die Ausgleichsschicht 61 stufenweise ausgeführt werden, wodurch beim Laminieren eine gleichmäßigere Druckverteilung auf die Elektrode 34 im Übergangsbereich 52 erreicht wird.

In einer weiteren Ausführungsform, die nicht näher dargestellt ist, wird der Übergangsbereich 52 in ein Bereich des Sensorelements gelegt, in dem der Gaskanal 31 besonders schmal ist, beispielsweise bei dem in Figur 2 gezeigte Sensorelement 10 nicht in den meßseitigen Bereich 62 mit breitem Gaskanal 31, sondern in den anschlußseitigen Bereich 63 mit schmalem Gaskanal 31. Hierdurch wird erreicht, daß beim Laminieren der lokale Druck im Übergangsbereich geringer ist.

Es ist ebenso eine Ausführungsform denkbar, in der eine beliebige Kombination der in den Unteransprüchen genannten Maßnahmen vorliegt.

In einer Ausgestaltung der Erfindung bezüglich des Verfahrens zur Herstellung des erfindungsgemäßen Sensorelements wird beim Laminieren ein hartes Preßpolster verwendet, so daß beim Laminieren eine Überhöhung des Drucks im Bereich des Gaskanals 31 und somit im Übergangsbereich 52 vermieden wird.

## Patentansprüche

1. Elektrochemischer Messfühler zur Bestimmung von Gaskomponenten und/oder Gaskonzentrationen in Gasgemischen mit einem Sensorelement (10), das eine erste Festelektrolytschicht (30), eine Elektrode (34), bestehend aus einer Elektrodenfläche (32) und einer Elektrodenzuleitung (33), und eine zweite Festelektrolytschicht (40) aufweist, wobei in die erste Festelektrolytschicht (30) ein Gaskanal (31) derart eingebracht ist, dass die Elektrode (34) in einem ersten, geklemmten Bereich (50) zwischen der ersten und der zweiten Festelektrolytschicht (30, 40) und in einem zweiten, offenen Bereich (51) zwischen der zweiten Festelektrolytschicht (40) und dem Gasraum (31) angeordnet ist, **dadurch gekennzeichnet, dass** zwischen der Elektrode (34) und der ersten oder zweiten Festelektrolytschicht (30, 40) mindestens eine Folienbinderschicht (35) angeordnet ist, und dass im Übergangsbereich (52) zwischen dem geklemmten Bereich (50) und dem offenen Bereich (51) mindestens eine an sich vorgesehene Folienbinderschicht (35) ausgespart ist, wodurch die Elektrode (34) bei einem Laminierprozess einem geringeren Druck ausgesetzt ist.

2. Elektrochemischer Messfühler zur Bestimmung von Gaskomponenten und/oder Gaskonzentrationen in Gasgemischen mit einem Sensorelement (10), das eine erste Festelektrolytschicht (30), eine Elektrode (34), bestehend aus einer Elektrodenfläche (32) und einer Elektrodenzuleitung (33), und eine zweite Festelektrolytschicht (40) aufweist, wobei in die erste Festelektrolytschicht (30) ein Gaskanal (31) derart eingebracht ist, dass die Elektrode (34) in einem ersten, geklemmten Bereich (50) zwischen der ersten und der zweiten Festelektrolytschicht (30, 40) und in einem zweiten, offenen Bereich (51) zwischen der zweiten Festelektrolytschicht (40) und dem Gasraum (31) angeordnet ist, **dadurch gekennzeichnet, dass** die erste und/oder die zweite Festelektrolytschicht (30, 40) im Übergangsbereich (52) zwischen dem geklemmten Bereich (50) und dem offenen Bereich (51) eine vorzugsweise geprägte Aussparung (60) für die Elektrode (34) aufweist, wodurch die Elektrode (34) bei einem Laminierprozess einem geringeren Druck ausgesetzt ist.

3. Elektrochemischer Messfühler zur Bestimmung von Gaskomponenten und/oder Gaskonzentrationen in Gasgemischen mit einem Sensorelement (10), das eine erste Festelektrolytschicht (30), eine Elektrode (34), bestehend aus einer Elektrodenfläche (32) und einer Elektrodenzuleitung (33), und eine zweite Festelektrolytschicht (40) aufweist, wobei in die erste Festelektrolytschicht (30) ein Gaskanal (31) derart eingebracht ist, dass die Elektrode (34) in einem ersten, geklemmten Bereich (50) zwischen der ersten und der zweiten Festelektrolytschicht (30, 40) und in einem zweiten, offenen Bereich (51) zwischen der zweiten Festelektrolytschicht (40) und dem Gasraum (31) angeordnet ist, **dadurch gekennzeichnet, dass** im Übergangsbereich (52) zwischen dem geklemmten Bereich (50) und dem offenen Bereich (51) neben der Elektrode (34) eine Ausgleichsschicht (61) angeordnet ist, wodurch die Elektrode (34) bei einem Laminierprozess einem geringeren Druck ausgesetzt ist.

4. Messfühler nach Anspruch 1, **dadurch gekennzeichnet, dass** die Aussparung der Folienbinderschicht (35) stufenweise ausgeführt wird.

5. Messfühler nach Anspruch 2, **dadurch gekennzeichnet, dass** die vorzugsweise geprägte Aussparung (60) stufenweise ausgeführt wird.

6. Messfühler nach Anspruch 3, **dadurch gekennzeichnet, dass** die Ausgleichsschicht (61) stufenweise ausgeführt wird.

7. Messfühler nach Anspruch 1- 3, **dadurch gekennzeichnet, dass** der Übergangsbereich (52) in einen Bereich des Sensorelements (10) gelegt wird, in dem der Gaskanal (31) einen geringen Flächenanteil aufweist.

8. Messfühler nach Anspruch 1 - 3, **dadurch gekennzeichnet, dass** die Elektrode (34) entlang der Grenzfläche zwischen dem ersten und dem zweiten Bereich (50, 51) deutlich breiter ist als im Bereich des Gaskanals (31).

9. Verfahren zur Herstellung eines elektrochemischen Messfühlers nach mindestens einem der vorherigen Ansprüche, wobei das Sensorelement (10) durch Drucken, durch Zusammenlaminieren unter Anwendung einer Presskraft mittels eines Presspolsters und durch Sintern hergestellt wird, **dadurch gekennzeichnet, dass** die Elektrode (34) beim Laminieren mit im Übergangsbereich (52) lokal geringerem Druck beaufschlagt wird.

## Claims

1. Electrochemical measurement sensor for determination of gas components and/or gas concentrations in gas mixtures, having a sensor element (10) which has a first solid electrolyte layer (30), an electrode (34) comprising an electrode surface (32) and an electrode supply line (33), and a second solid electrolyte layer (40), with a gas channel (31) being incorporated in the first solid electrolyte layer (30) such that the electrode (34) is arranged in a first, clamped area (50) between the first and the second solid electrolyte layer (30, 40) and in a second, open area (51) between the second solid electrolyte layer (40) and the gas area (31), **characterized in that** at least one film binder layer (35) is arranged between the electrode (34) and the first or second solid electrolyte layer (30, 40), and **in that** at least one film binder layer (35), which is provided in its own right, is cut out in the transitional area (52) between the clamped area (50) and the open area (51), thus resulting in the electrode (34) being subjected to less pressure during a lamination process.

2. Electrochemical measurement sensor for determination of gas components and/or gas concentrations in gas mixtures, having a sensor element (10) which has a first solid electrolyte layer (30), an electrode (34) comprising an electrode surface (32) and an electrode supply line (33), and a second solid electrolyte layer (40), with a. gas channel (31) being incorporated in the first solid electrolyte layer (30) such that the electrode (34) is arranged in a first, clamped area (50) between the first and the second solid electrolyte layer (30, 40) and in a second, open area (51) between the second solid electrolyte layer (40) and the gas area (31), **characterized in that** the first and/or the second solid electrolyte layer (30, 40) have/has a preferably stamped cutout (60) for the electrode (34) in the transitional area (52) between the clamped area (50) and the open area (51), thus resulting in the electrode (34) being subjected to less pressure during a lamination process.

3. Electrochemical measurement sensor for determination of gas components and/or gas concentrations in gas mixtures, having a sensor element (10) which has a first solid electrolyte layer (30), an electrode (34) comprising an electrode surface (32) and an electrode supply line (33), and a second solid electrolyte layer (40), with a gas channel (31) being incorporated in the first solid electrolyte layer (30) such that the electrode (34) is arranged in a first, clamped area (50) between the first and the second solid electrolyte layer (30, 40) and in a second, open area (51) between the second solid electrolyte layer (40) and the gas area (31), **characterized in that** a compensation layer (61) is arranged in addition to the electrode (34) in the transitional area (52) between the clamped area (50) and the open area (51), thus resulting in the electrode (34) being subjected to less pressure during a lamination process.

4. Measurement sensor according to Claim 1, **characterized in that** the cutout in the film binder layer (35) is formed in steps.

5. Measurement sensor according to Claim 2, **characterized in that** the preferably stamped cutout (60) is formed in steps.

6. Measurement sensor according to Claim 3, **characterized in that** the compensation layer (61) is formed in steps.

7. Measurement sensor according to Claims 1 to 3, **characterized in that** the transitional area (52) is located in an area of the sensor element (10) in which the gas channel (31) occupies a small proportion of the area.

8. Measurement sensor according to Claims 1 to 3, **characterized in that** the electrode (34) is considerably broader along the boundary surface between the first and the second area (50, 51) than in the area of the gas channel (31).

9. Method for production of an electrochemical measurement sensor according to at least one of the preceding claims, with the sensor element (10) being produced by pressing, by laminating-together using a pressing force by means of a pressing cushion and by sintering, **characterized in that** the electrode (34) has less pressure applied to it locally in the transitional area (52) during lamination.

## Revendications

1. Capteur de mesure électrochimique pour déterminer des composants d'un gaz et/ou des concentrations d'un gaz dans des mélanges de gaz, à l'aide d'un élément de capteur (10) ayant une première couche d'électrolyte (30), une électrode (34) formée d'une surface d'électrode (32) et d'une ligne d'alimentation d'électrode (33) ainsi que d'une seconde couche d'électrolyte solide (40),
un canal de gaz (31) étant intégré dans la première couche d'électrolyte solide (30),
l'électrode (34) étant installée dans une première zone (50), serrée entre la première et la seconde couche d'électrolyte solide (30, 40) et dans une seconde zone (51) ouverte, entre la seconde couche d'électrolyte solide (40) et le volume de gaz (31),
**caractérisé en ce que**
l'électrode (34) et la première ou la seconde couche d'électrolyte solide (30, 40) sont installées dans au moins une couche de liaison de film (35) et
dans la zone transitoire (52) entre la zone enserrée (50) et la zone ouverte (51), on a dégagé au moins une couche de film de liaison (35) prévue en tant que telle, de façon que l'électrode (34) soit soumise à une pression réduite au cours d'un procédé de laminage.

2. Capteur de mesure électrochimique pour déterminer des composants d'un gaz et/ou des concentrations d'un gaz dans des mélanges de gaz à l'aide d'un élément de capteur (10) ayant une première couche d'électrolyte (30), une électrode (34) formée d'une surface d'électrode (32) et d'une ligne d'alimentation d'électrode (33) ainsi que d'une seconde couche d'électrolyte solide (40),
un canal de gaz (31) étant intégré dans la première couche d'électrolyte solide (30),
l'électrode (34) étant installée dans une première zone (50), serrée entre la première et la seconde couche d'électrolyte solide (30, 40) et dans une seconde zone (51) ouverte, entre la seconde couche d'électrolyte solide (40) et le volume de gaz (31),
**caractérisé en ce que**
la première et/ou la seconde couche d'électrolyte solide (30, 40) comportent dans la zone transitoire (52), entre la zone enserrée (50) et la zone ouverte (51), un dégagement (60), de préférence accentué, pour l'électrode (34) de façon que l'électrode (34) ne soit soumise qu'à une pression réduite au cours d'une opération de laminage.

3. Capteur de mesure électrochimique pour déterminer des composants d'un gaz et/ou des concentrations d'un gaz dans des mélanges de gaz à l'aide d'un élément de capteur (10) ayant une première couche d'électrolyte (30), une électrode (34) formée d'une surface d'électrode (32) et d'une ligne d'alimentation d'électrode (33) ainsi que d'une seconde couche d'électrolyte solide (40),
un canal de gaz (31) étant intégré dans la première couche d'électrolyte solide (30),
l'électrode (34) étant installée dans une première zone (50), serrée entre la première et la seconde couche d'électrolyte solide (30, 40) et dans une seconde zone (51) ouverte, entre la seconde couche d'électrolyte solide (40) et le volume de gaz (31),
**caractérisé en ce que**
dans la zone transitoire (52), entre la zone enserrée (50) et la zone ouverte (51), à côté de l'électrode (34) il y a une couche de compensation (61) de façon que l'électrode (34) soit soumise seulement à une pression réduite au cours d'une opération de laminage.

4. Capteur de mesure selon la revendication 1,
**caractérisé en ce que**
le dégagement de la couche du film de liaison (35) est réalisé par étapes.

5. Capteur de mesure selon la revendication 2,
**caractérisé en ce que**
le dégagement (60), de préférence imprimé, est réalisé par étapes.

6. Capteur de mesure selon la revendication 3,
**caractérisé en ce que**
la couche de compensation (61) est réalisée par étapes.

7. Capteur de mesure selon les revendications 1-3,
**caractérisé en ce que**
la zone transitoire (52) est située dans une zone de l'élément de capteur (10) dans laquelle le canal de gaz (31) présente une faible composante de surface.

8. Capteur de mesure selon les revendications 1-3,
**caractérisé en ce que**
l'électrode (34) est significativement plus large le long de la surface limite entre la première et la seconde zone (50, 51) que dans la zone du canal de gaz (31).

9. Procédé de fabrication d'un capteur de mesure électrochimique selon au moins l'une des revendications précédentes, selon lequel, l'élément de capteur (10) est fabriqué par compression, par combinaison par laminage en utilisant une force de compression à l'aide d'un coussin de compression et par frittage,
**caractérisé en ce que**
l'électrode (34) est soumise à une pression locale réduite dans la zone transitoire (52) lors du laminage.
